# EUROPEAN PATENT APPLICATION

(11) **EP 1 484 810 A1**
(43) Date of publication of application: **08.12.2004**
(21) Application number: 03710331.4
(22) Date of filing: 13.03.2003
(51) Int. Cl.: H01M 4/88, H01M 8/02, H01M 8/10

(54) **METHOD FOR MANUFACTURING POLYMER ELECTROLYTE TYPE FUEL CELL**

(30) Priority: 14.03.2002 JP 2002070350
(71) Applicant: MATSUSHITA ELECTRIC INDUSTRIAL CO., LTD., Kadoma-shi, Osaka 571-8501 (JP)
(72) Inventor: UEYAMA, Yasuhiro, Nishinomiya-shi, Hyogo 662-0032 (JP); WATANABE, Masaru, Nishinomiya-shi, Hyogo 662-8186 (JP); KAMIKIHARA, Nobuyuki, Hirakata-shi, Osaka 573-0066 (JP); YASUMOTO, Eiichi, Souraku-gun, Kyoto 619-0238 (JP)
(74) Representative: Schirdewahn, Jürgen, Dr.
(86) International application number: PCT/JP2003/002973
(87) International publication number: WO 2003/077336

(57) **Abstract**

A method of producing a polymer electrolyte membrane type fuel cell comprising a polymer electrolyte membrane, electrodes each containing a gas diffusion layer and a catalyst layer provided in contact with the aforementioned polymer electrolyte membrane, disposed on the respective side of the aforementioned polymer electrolyte membrane and a separator provided in contact with the aforementioned gas diffusion layer, characterized in that during a step of spreading a paste containing at least a finely divided carbon powder having a noble metal catalyst supported thereon, over a predetermined support, and drying the coated support to form the aforementioned catalyst layer, the cracking occupation area on the aforementioned electrodes is controlled to a predetermined tolerance focusing at least (1) thickness of the aforementioned catalyst layer, (2) kind of carbon having the aforementioned noble metal catalyst supported thereon and (3) drying rate of the solvent of the aforementioned paste. For example, the thickness is predetermined to be from 10 µm to 25 µm, the kind of carbon having the aforementioned noble metal catalyst supported thereon is predetermined to be carbon having from 5 wt% to 20 wt% of platinum supported thereon and the drying rate of the aforementioned solvent is predetermined to be from 2. 5 mg/cm²·min to 20 mg/cm²·min.

## Description

### Technical Field

The present invention relates to a method of producing a polymer electrolyte type fuel cell and a polymer electrolyte membrane type fuel cell.

### Background Art

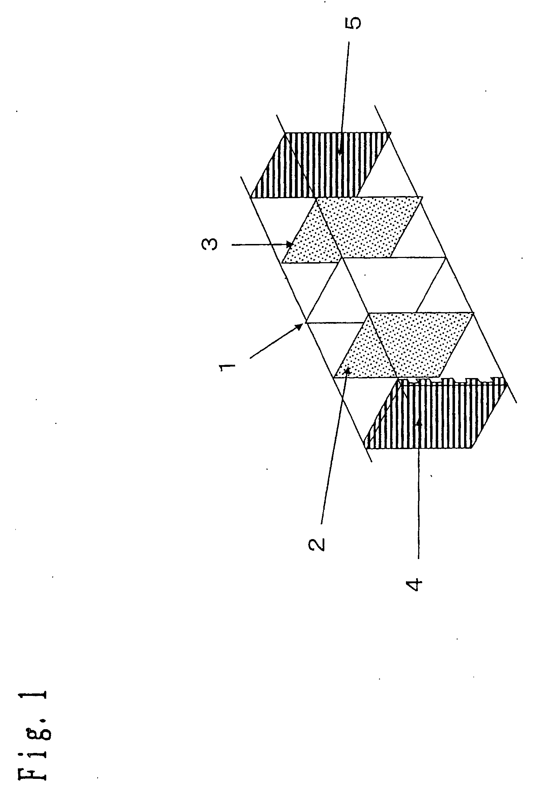

A fuel cell allows the electrochemical reaction of a fuel gas with an oxidizer gas containing oxygen such as air to generate electric power energy. A polymer electrolyte type fuel cell is a kind of fuel cell. An example of single cell constituting a polymer electrolyte type fuel cell is shown in Fig. 1.

In Fig. 1, the reference numeral 1 indicates a polymer membrane which is used as a hydrogen ionically-conductive membrane. The reference numeral 2 indicates a fuel electrode formed by a gas diffusion layer and a catalyst layer. The gas diffusion layer is formed by a carbon sheet and a water-repellent layer. The reference numeral 3 indicates an air electrode formed by a gas diffusion layer and a catalyst layer which are similar to the fuel electrode cell. The reference numeral 5 indicates a separator which acts to prevent the mixing of hydrogen supplied onto the fuel electrode and air supplied onto the air electrode in the assembly of fuel cell having single cells bonded to each other.

This polymer electrolyte type fuel cell is prepared as follows. Firstly, a carbon powder having a noble metal catalyst supported thereon (hereinafter referred to as "catalyst-supporting carbon powder") as a catalyst body is mixed with a binder resin to prepare a catalyst layer paste. Further, a gas diffusion layer is formed by, e.g., a carbon paper having both permeability to fuel gas containing hydrogen and electronic conductivity which has been subjected to water repellent treatment. The aforementioned paste is then spread over the gas diffusion layer to form a catalyst layer thereon, thereby preparing an electrode (Therefore, the step of preparing a paste is occasionally referred to as "step of preparing a coating compound").

In order to render this catalyst layer smooth and free of agglomerate, it is necessary that the paste be subjected to mixing at a high shear rate to accelerate the formation of the catalyst-supporting carbon powder into primary particles.

Subsequently, this electrode is bonded to one or both sides of a polymer electrolyte membrane which selectively transports hydrogen ion to prepare a single cell. As the polymer electrolyte membrane there is normally used a perfluorosulfonic acid which is a hydrogen ionically-conductive polymer electrolyte.

The aforementioned binding resin is adopted to enhance the bond properties of the catalyst layer with the gas diffusion layer and the polymer electrolyte membrane. As the binder resin there is normally used a perfluorosulfonic acid as in the case of polymer electrolyte membrane.

In order to further enhance the bond properties, as a binder resin there is also incorporated a fluororesin such as polytetrafluoroethylene and polyvinylidene fluoride.

Examples of method of producing such a related art polymer electrolyte type fuel cell include those disclosed in JP-A-2001-38268 and JP-A-6-29025.

By the way, the related art polymer electrolyte membrane type fuel cell needs to have a lifetime of at least 5,000 hours. Those having a lifetime of not greater than 5,000 hours were not practical. However, the main cause affecting the lifetime was unknown. Therefore, the yield of fuel cells in the related art method was low.

### Disclosure of the Invention

An aim of the present invention is to provide a method of producing a polymer electrolyte membrane type fuel cell which allows the production of a high quality polymer electrolyte type fuel cell that undergoes no leak and exhibits improved life performance in a high yield taking into account the aforementioned problems with the method of producing the related art polymer electrolyte membrane type fuel cell and a polymer electrolyte membrane type fuel cell obtained utilizing the production method.

The inventors found that when the polymer electrolyte membrane type fuel cell produced by the related art method of producing a polymer electrolyte membrane type fuel cell has a short lifetime, the catalyst layer has much pinholes or cracking and then discovered that such cracking causes the occurrence of current density distribution that deteriorates the discharge performance or the catalyst layer falls off the cracked area, deteriorating the life performance of the cell.

Further, the inventors studied the cause of the occurrence of the aforementioned cracking. As a result, it was found that since the catalyst-supporting carbon powder is a particulate material comprising primary particles having a diameter of not greater than 100 nm and thus tends to undergo agglomeration, the particles remain primary shortly after mixed at a high shear rate but undergo agglomeration with the evaporation of the solvent during spreading and drying, resulting in the a catalyst layer occurrence of pinholes or cracking in the catalyst layer portion.

Then, the inventors considered that the improvement of the spreading/drying step makes it possible to produce a polymer electrolyte membrane type fuel cell which undergoes no cracking.

Further, the inventors studied the relationship between the properties of electrode coat layer and the discharge performance. As a result, the measurement of the volume resistivity of the catalyst layer shows that electrodes having much area of pinholes or cracking exhibit a high volume resistivity while electrodes free of pinholes or cracking exhibit a low volume resistivity. It was also found that a fuel cell comprising an electrode having a low volume resistivity undergoes no leak and thus provides a polymer electrolyte type fuel cell having improved life performance.

The present invention has been worked out under the circumstances of the aforementioned analysis.

Accordingly, the first aspect of the present invention lies in a method of producing a polymer electrolyte membrane type fuel cell comprising a polymer electrolyte membrane, electrodes each containing a gas diffusion layer and a catalyst layer provided in contact with the aforementioned polymer electrolyte membrane, disposed on the respective side of the aforementioned polymer electrolyte membrane and a separator provided in contact with the aforementioned gas diffusion layer, characterized in that during a step of spreading a paste containing at least a finely divided carbon powder having a noble metal catalyst supported thereon, over a predetermined support and drying the coated support to form the aforementioned catalyst layer, the cracking occupation area on the aforementioned electrodes is controlled to a predetermined tolerance focusing at least (1) thickness of the aforementioned catalyst layer, (2) kind of carbon having the aforementioned noble metal catalyst supported thereon and (3) drying rate of the solvent of the aforementioned paste.

Further, the second aspect of the present invention lies in the method of producing a polymer electrolyte membrane type fuel cell as described in the first aspect of the present invention, wherein the tolerance of the aforementioned cracking occupation area is not greater than 25%.

The third aspect of the present invention lies in a method of producing a polymer electrolyte membrane type fuel cell comprising a polymer electrolyte membrane, electrodes each containing a gas diffusion layer and a catalyst layer provided in contact with the aforementioned polymer electrolyte membrane, disposed on the respective side of the aforementioned polymer electrolyte membrane and a separator provided in contact with the aforementioned gas diffusion layer, characterized in that during a step of spreading a paste containing at least a finely divided carbon powder having a noble metal catalyst supported thereon, over a predetermined support and drying the coated support to form the aforementioned catalyst layer, the volume resistivity of the aforementioned catalyst layer is controlled to a predetermined tolerance focusing at least (1) thickness of the aforementioned catalyst layer, (2) kind of carbon having the aforementioned noble metal catalyst supported thereon and (3) drying rate of the solvent of the aforementioned paste.

The fourth aspect of the present invention lies in the method of producing a polymer electrolyte membrane type fuel cell of the third aspect wherein the tolerance of the aforementioned volume resistivity is not greater than 100 (Ω·cm).

The fifth aspect of the present invention lies in the method of producing a polymer electrolyte membrane type fuel cell of the first or third aspect wherein the aforementioned thickness is predetermined to be from 10 µm to 25 µm, the kind of carbon having the aforementioned noble metal catalyst supported thereon is predetermined to be carbon having from 5 wt% to 20 wt% of platinum supported thereon and the drying rate of the aforementioned solvent is predetermined to be from 2. 5 mg/cm²·min to 20 mg/cm²·min.

The sixth aspect of the present invention lies in the method of producing a polymer electrolyte membrane type fuel cell of the fourth aspect wherein the ratio of the volume resistivity of the aforementioned catalyst layer to the volume resistivity of the aforementioned gas diffusion layer (volume resistivity of catalyst/volume resistivity of gas diffusion layer) is not greater than 10⁷.

The seventh aspect of the present invention lies in the method of producing a polymer electrolyte membrane type fuel cell of the first or third aspect wherein the drying rate of the aforementioned solvent is adjusted focusing the kind of the solvent and/or the drying temperature.

The eighth aspect of the present invention lies in the method of producing a polymer electrolyte membrane type fuel cell of any of the first to seventh aspects wherein the polymer electrolyte membrane type fuel cell is used as a household fuel cell.

The ninth aspect of the present invention lies in a polymer electrolyte membrane type fuel cell comprising a polymer electrolyte membrane, electrodes each containing a gas diffusion layer and a catalyst layer provided in contact with the aforementioned polymer electrolyte membrane, disposed on the respective side of the aforementioned polymer electrolyte membrane and a separator provided in contact with the aforementioned gas diffusion layer, characterized in that the aforementioned catalyst layer is one formed by controlling the cracking occupation area on the aforementioned electrodes to a predetermined tolerance focusing at least (1) thickness of the aforementioned catalyst layer, (2) kind of carbon having the aforementioned noble metal catalyst supported thereon and (3) drying rate of the solvent of the aforementioned paste during a step of spreading a paste containing at least a finely divided carbon powder having a noble metal catalyst supported thereon over a predetermined support and drying the coated support to form the aforementioned catalyst layer.

The tenth aspect of the present invention lies in the polymer electrolyte membrane type fuel cell of the ninth aspect wherein the tolerance of the aforementioned cracking occupation area is not greater than 25%.

The eleventh aspect of the present invention lies in a polymer electrolyte membrane type fuel cell comprising a polymer electrolyte membrane, electrodes each containing a gas diffusion layer and a catalyst layer provided in contact with the aforementioned polymer electrolyte membrane, disposed on the respective side of the aforementioned polymer electrolyte membrane and a separator provided in contact with the aforementioned gas diffusion layer, characterized in that the aforementioned catalyst layer is one formed by controlling the volume resistivity of the aforementioned catalyst layer to a tolerance focusing at least (1) thickness of the aforementioned catalyst layer, (2) kind of carbon having the aforementioned noble metal catalyst supported thereon and (3) drying rate of the solvent of the aforementioned paste during a step of spreading a paste containing at least a finely divided carbon powder having a noble metal catalyst supported thereon over a predetermined support and drying the coated support to form the aforementioned catalyst layer.

The twelfth aspect of the present invention lies in the polymer electrolyte membrane type fuel cell of the eleventh aspect wherein the tolerance of the aforementioned volume resistivity is not greater than 100 (Ω·cm).

The thirteenth aspect of the present invention lies in the polymer electrolyte membrane type fuel cell of the ninth or the eleventh aspect wherein the aforementioned thickness is predetermined to be from 10 µm to 25 µm, the kind of carbon having the aforementioned noble metal catalyst supported thereon is predetermined to be carbon having from 5 wt% to 20 wt% of platinum supported thereon and the drying rate of the aforementioned solvent is predetermined to be from 2.5 mg/cm²·min to 20 mg/cm²·min.

The fourteenth aspect of the present invention lies in the polymer electrolyte membrane type fuel cell of the twelfth aspect wherein the ratio of the volume resistivity of the aforementioned catalyst layer to the volume resistivity of the aforementioned gas diffusion layer (volume resistivity of catalyst/volume resistivity of gas diffusion layer) is not greater than 10⁷.

The fifteenth aspect of the present invention lies in the polymer electrolyte membrane type fuel cell of any one of the ninth to fourteenth aspects wherein the polymer electrolyte membrane type fuel cell is used as a household fuel cell.

The sixteenth aspect of the present invention lies in a polymer electrolyte membrane type fuel cell comprising a polymer electrolyte membrane, electrodes each containing a gas diffusion layer and a catalyst layer provided in contact with the aforementioned polymer electrolyte membrane, disposed on the respective side of the aforementioned polymer electrolyte membrane and a separator provided in contact with the aforementioned gas diffusion layer, wherein the volume resistivity of the aforementioned catalyst layer is not greater than 100 [Ω·cm].

The seventeenth aspect of the present invention lies in a polymer electrolyte membrane type fuel cell comprising a polymer electrolyte membrane, electrodes each containing a gas diffusion layer and a catalyst layer provided in contact with the aforementioned polymer electrolyte membrane, disposed on the respective side of the aforementioned polymer electrolyte membrane and a separator provided in contact with the aforementioned gas diffusion layer, wherein the ratio of the volume resistivity of the aforementioned catalyst layer to the volume resistivity of the aforementioned gas diffusion layer (volume resistivity of catalyst/volume resistivity of gas diffusion layer) is not greater than 10⁷.

The mechanism of deterioration of cell performance due to cracking can be presumed as follows.

When the cracking occupation area exceeds 25%, the catalyst area decreases to raise the current density. It is thought that as a result, the reaction heat developed during the reaction on the surface of the catalyst causes temperature rise that deteriorates locally the electrically-conductive polymer and thus reduces the life. Further, when the cracking occupation area exceeds 25%, it induces flooding, i.e. , accumulation of water produced by the reaction, in voids formed by cracking, reducing theelectricitygenerationefficiency. Moreover, when the cracking occupation area exceeds 25%, at the time of clamping a laminate of separator, gas diffusion layer, catalyst layer, polymer membrane, catalyst layer, gas diffusion layer and separator, the catalyst layer has a reduced area and thus receives concentratedly a clamping pressure to become dense. As a result, flooding, i.e., accumulation of water produced by the reaction, is induced, deteriorating the electricity generation efficiency.

### Brief Description of the Drawings

Fig. 1 is a sectional view illustrating the outline of the configuration of a single cell which is a constituent of an ordinary fuel cell stack.
Fig. 2 is a current density-discharge rate graph of the cell of Example 1 of the present invention.
Fig. 3 is a current density-discharge rate graph of the cell of Example 9 of the present invention.
Fig. 4 is a current density-discharge rate graph of the cell of Example 16 of the present invention.
Fig. 5 is a current density-discharge rate graph of the cell of Example 22 of the present invention.
Fig. 6 is a current density-discharge rate graph of the cell of Example 28 of the present invention.
Fig. 7 is a current density-discharge rate graph of the cell of Example 33 of the present invention.
Fig. 8 is a current density-discharge rate graph of the cell of Comparative Example 6 as opposed to the present invention.
Fig. 9 is a current density-discharge rate graph of the cell of Comparative Example 12 as opposed to the present invention.
Fig. 10 is a current density-discharge rate graph of the cell of Comparative Example 18 as opposed to the present invention.
Fig. 11 is a current density-discharge rate graph of the cell of Comparative Example 27 as opposed to the present invention.
Fig. 12 is a graph illustrating the relationship between the cracking occupation area and the life in an embodiment of implementation of the present invention.

### (Description of Reference Numerals)

1. Polymer membrane
2. Air electrode
3 Fuel electrode
4. Separator
5. Separator

### Best Mode for Carrying Out the Invention

Embodiments of implementation of the present invention will be described hereinafter.

As the carbon powder having a platinum group noble metal supported thereon to be used in the method of producing a polymer electrolyte membrane type fuel cell of the present invention there may be used an electrically-conductive carbon black such as ketjen black and acetylene black.

Further, as the binder resin there is normally used a perfluorosulfonic acid which exerts an effect as a hydrogen ionically-conductive polymer electrolyte. Moreover, for the purpose of enhancing bond properties, a fluororesin such as polytetrafluoroethylene, polyvinylidene fluoride resin and polyvinylidene fluoride-hexafluoropropylene copolymer may be used as a binder resin. Further, a treatment may be previously conducted to cause a fluororesin to be attached to a carbon powder having a noble metal supported thereon using a mixer such as Henschel mixer produced by MITSUI MINING COMPANY, LIMITED.

As solvents to be mixed with the carbon powder having a noble metal supported thereon there may be used water, ethyl alcohol, methyl alcohol, isopropyl alcohol, ethylene glycol, methylene glycol, propylene glycol, methyl ethyl ketone, acetone, toluene, xylene, n-methyl-2-pyrrolidone, etc., singly or in combination of two or more thereof. The amount of these solvents to be added is preferably from 10 to 400 based on 100 of the catalyst powder by weight.

Referring to the method of preparing the catalyst layer paste, a carbon powder having a catalyst supported thereon, a binder resin and optionally solvents may be processed by facilities such s disolver, double planetary mixer, kneader, bead mill, ultrasonic dispersion machine and ultrahigh pressure homogenizer, singly or continuously in succession, to prepare the catalyst layer paste.

Referring to the method of spreading the catalyst layer paste; facilities such as comma coater, kiss coater, roll coater, doctor blade, spray coater, die coater and gravure coater may be used. As drying means there may be used infrared drying, hot air drying or UV curing drying method.

The thickness of the catalyst layer thus spread and dried is, e.g., from 10 µm to 25 µm.

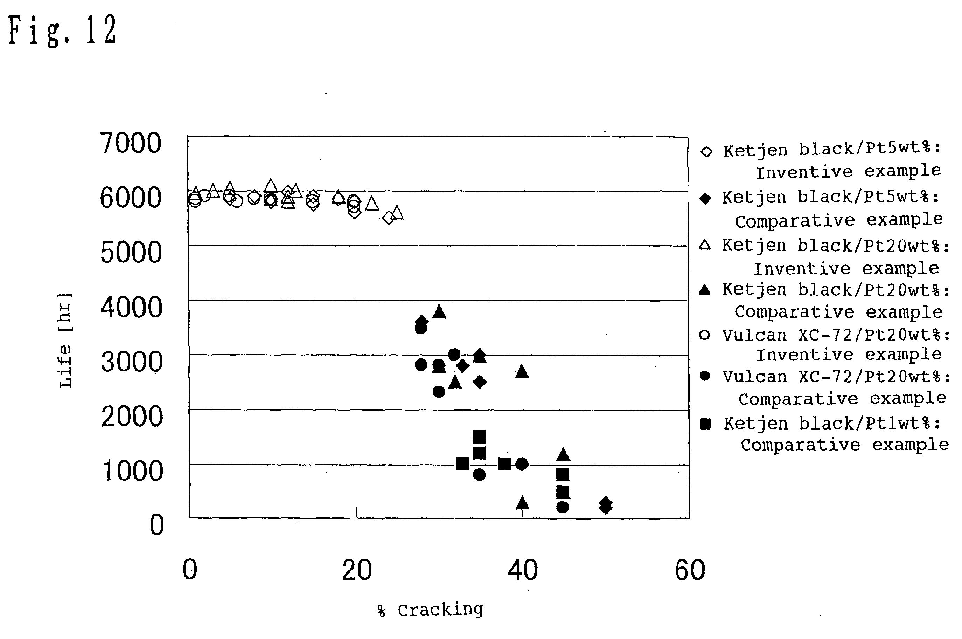

By the way, the tolerance of the cracking occupation area of the polymer electrolyte membrane type fuel cell thus produced is not greater than 25% (see Fig. 12). This is a critical value at which a polymer electrolyte membrane type fuel cell can be operated as a household fuel cell for a practical minimum lifetime of 5,000 hours. Fig. 12 is a graph with cracking occupation area plotted as abscissa and lifetime plotted as ordinate. As can be seen in this graph, it is necessary that the cracking occupation area be not greater than 25% to secure a lifetime of 5,000 hours.

Further, as can be seen in Table 2 given below, in order to predetermine the cracking occupation area to be not greater than 25%, the volume resistivity of the catalyst layer thus spread and dried is preferably not greater than 100 [Ω·cm]. It can be seen in Table 2 that when the volume resistivity is greater than 100 [Ω·cm], the resulting electrode is much provided with so-called cracking or pinholes and thus is not provided with discharge performance.

The lower limit of the volume resistivity is preferably low. However, since the volume resistivity of the simple body of the carbon having a catalyst supported thereon to be used in the catalyst layer is 10⁻³ [Ω·cm], the lower limit of the volume resistivity of the catalyst layer is substantially 10⁻³ [Ω·cm] and it cannot be substantially anticipated that the lower limit of the volume resistivity of the catalyst layer falls below this value.

By the way, referring to the method of predetermining the aforementioned cracking occupation area to be not greater than 25% or predetermining the volume resistivity of the electrode thus spread and dried to be not greater than 100 [Ω·cm], the cracking occupation area of the aforementioned electrode can be controlled to a predetermined tolerance or the volume resistivity of the aforementioned catalyst layer can be controlled to a tolerance focusing at least (1) thickness of the aforementioned catalyst layer, (2) kind of carbon having the aforementioned noble metal catalyst supported thereon and (3) drying rate of the solvent of the aforementioned paste during a step of spreading a paste containing at least a finely divided carbon powder having a noble metal catalyst supported thereon over a predetermined support and drying the coated support to form the aforementioned catalyst layer.

Referring to the drying rate of the solvent, the drying rate of the catalystpastemaybe reduced so that the catalyst paste is dried without causing cracking in the catalyst layer. For example, a method can be proposed which comprises optimizing the drying temperature and amount of air flow in the hot air dryer. Alternatively, a method may be used which comprises preparing a solvent mixture having a stepwise combination of boiling points of various solvents focusing the kind of solvents.

Further, the cracking occupation area or volume resistivity can be controlled also by properly predetermining the thickness of the catalyst layer thus spread and dried.

The gas diffusion layer can be formed by mixing acetylene black as a carbon powder with an aqueous dispersion of a polytetrafluoroethylene, spreading the ink over a carbon paper which acts as a base material of gas diffusion layer, and then subjecting the coated material to heat treatment. During this procedure, the volume resistivity of the gas diffusion layer can be controlled by the kind of carbon paper which acts as a base material and the amount of acetylene black to be incorporated.

Next, the ratio of the volume resistivity of the aforementioned catalyst layer to the volume resistivity of the aforementioned gas diffusion layer (volume resistivity of catalyst/volume resistivity of gas diffusion layer) is preferably not greater than 10⁷. When the ratio of the volume resistivity of the aforementioned catalyst layer to the volume resistivity of the aforementioned gas diffusion layer exceeds 10⁷, the resistivity of the catalyst layer to the gas diffusion layer changes greatly, causing the drop of discharge efficiency. The requirement that the ratio of the volume resistivity of the aforementioned catalyst layer to the volume resistivity of the aforementioned gas diffusion layer (volume resistivity of catalyst/volume resistivity of gas diffusion layer) is preferably not greater than 10⁷ can be easily derived from the fact that the aforementioned catalyst volume resistivity is preferably 100 [Ω·cm] and the fact that the lower limit of the volume resistivity of the gas diffusion layer is from 10⁻⁵ to 10⁻³ [Ω·cm]. In other words, the lower limit of the volume resistivity ratio is not specifically limited. However, since the volume resistivity of the carbon paper to be used in the gas diffusion layer is about 10⁻⁵ [Ω·cm], it is substantially difficult to predetermine the lower limit of the volume resistivity of the gas diffusion layer to be not greater than this value. The lower limit of the volume resistivity of the gas diffusion layer is normally from 10⁻⁵ to 10⁻³ [Ω·cm].

The method of predetermining the ratio of the volume resistivity of the catalyst layer to the gas diffusion layer to be not greater than 10⁷ is not specifically limited, but the drying rate of the catalyst paste may be reduced so that the catalyst paste is dried without causing cracking as mentioned above with reference to the method of preparing the catalyst layer. For example, a method can be proposed which comprises optimizing the drying temperature and amount of air flow in the hot air dryer. Alternatively, a method may be used which comprises preparing a solvent mixture having a stepwise combination of boiling points of various solvents.

These methods may be combined with a method which comprises spreading a catalyst layer paste over a gas diffusion layer, and then drying the coated material, a method which comprises spreading a catalyst layer over a polymer support such as polypropylene and polyethylene terephthalate, drying the coated material, and then subjecting the coated material to hot press to cause transfer, a method which comprises directly spreading a catalyst layer paste over a polymer membrane, drying the coated material, and then laminating the coated material on a gas diffusion layer or the like to make accomplishment.

### (Example)

Examples of the present invention will be described hereinafter.

### (Example 1)

Referring to a first embodiment of implementation of the present invention, a step of preparing a coating compound of catalyst layer was carried out by mixing a catalyst-supporting carbon powder having 5% by weight of platinum catalyst supported on ketjen black which is a carbon powder with a composition of a 1/1/1 mixture of water, isopropyl alcohol and ethylene glycol as a solvent using a 5 l mixer produced by TOKUSHU KIKA KOGYO CO. , LTD., and then mixing the mixture with a perfluorosulfonic acid as a hydrogen ionically-conductive agent and binder in an amount of 80% based on the carbon component of the carbon powder having a catalyst supported thereon to prepare an anode paste having a solid content concentration of 20 wt%.

Subsequently, the aforementioned catalyst ink was spread over a polymer film made of a polyethylene terephthalate having a thickness of 50 µm, and then dried at a drying rate of 2.5 [mg/cm²·min] to form a catalyst layer to a thickness of 10 µm. The catalyst layer was then bonded to one side of a polymer electrolyte membrane to prepare an electrode.

Next, a method of producing a gas diffusion layer will be described. Acetylene black which is a carbon powder was mixed with an aqueous dispersion of a polytetrafluoroethylene to prepare a water-repellent ink containing a polytetrafluoroethylene in a dried amount of 20% by weight. This ink was spread over a carbon paper (TGP-H-120, produced by Toray Industries, Inc.) which acts as a base material of gas diffusion layer so that it penetrated the carbon paper, and then was subjected to heat treatment at 250°C using a hot air dryer to form a gas diffusion layer.

Subsequently, a gasket plate made of rubber was bonded to the polymer electrolyte membrane of the electrode thus prepared on the periphery thereof. A manifold hole for the passage of cooling water, fuel gas and oxidizer gas was then formed.

Subsequently, two sheets of electrically-conductive separators, which have a gas passage and a cooling water passage, made of graphite sheet impregnated with a phenolic resin were used. A separator having an oxidizer gas passage formed thereon, a gas diffusion layer, an electrode and a gas diffusion layer were laminated on one side of another electrode. A separator having a fuel gas passage formed thereon was laminated on the other side of the electrode to obtain a single cell as shown in Fig. 1.

### (Example 2)

A fuel cell was prepared in the same manner as in Example 1 except that the drying rate was 10 [mg/cm²·min].

### (Example 3)

A fuel cell was prepared in the same manner as in Example 1 except that the drying rate was 20 [mg/cm²·min].

### (Example 4)

A fuel cell was prepared in the same manner as in Example 1 except that the thickness of the catalyst layer was 15 µm.

### (Example 5)

A fuel cell was prepared in the same manner as in Example 4 except that the drying rate was 10 [mg/cm²·min].

### (Example 6)

A fuel cell was prepared in the same manner as in Example 5 except that the drying rate was 20 [mg/cm²·min].

### (Example 7)

A fuel cell was prepared in the same manner as in Example 1 except that the thickness of the catalyst layer was 20 µm.

### (Example 8)

A fuel cell was prepared in the same manner as in Example 7 except that the drying rate was 10 [mg/cm²·min].

### (Example 9)

A fuel cell was prepared in the same manner as in Example 8 except that the drying rate was 20 [mg/cm²·min].

### (Example 10)

A fuel cell was prepared in the same manner as in Example 1 except that the thickness of the catalyst layer was 25 µm.

### (Example 11)

A fuel cell was prepared in the same manner as in Example 10 except that the drying rate was 10 [mg/cm²·min].

### (Example 12)

A fuel cell was prepared in the same manner as in Example 11 except that the drying rate was 20 [mg/cm²·min].

### (Example 13)

A fuel cell was prepared in the same manner as in Example 1 except that the catalyst-supporting carbon powder was a catalyst-supporting carbon powder comprising ketjen black having 20% by weight of platinum catalyst supported thereon.

### (Example 14)

A fuel cell was prepared in the same manner as in Example 13 except that the drying rate was 10 [mg/cm²·min].

### (Example 15)

A fuel cell was prepared in the same manner as in Example 14 except that the drying rate was 20 [mg/cm²·min].

### (Example 16)

A fuel cell was prepared in the same manner as in Example 13 except that the thickness of the catalyst layer was 15 µm.

### (Example 17)

A fuel cell was prepared in the same manner as in Example 16 except that the drying rate was 10 [mg/cm²·min].

### (Example 18)

A fuel cell was prepared in the same manner as in Example 17 except that the drying rate was 20 [mg/cm²·min].

### (Example 19)

A fuel cell was prepared in the same manner as in Example 13 except that the thickness of the catalyst layer was 20 µm.

### (Example 20)

A fuel cell was prepared in the same manner as in Example 19 except that the drying rate was 10 [mg/cm²·min].

### (Example 21)

A fuel cell was prepared in the same manner as in Example 20 except that the drying rate was 20 [mg/cm²·min].

### (Example 22)

A fuel cell was prepared in the same manner as in Example 13 except that the thickness of the catalyst layer was 25 µm.

### (Example 23)

A fuel cell was prepared in the same manner as in Example 22 except that the drying rate was 10 [mg/cm²·min].

### (Example 24)

A fuel cell was prepared in the same manner as in Example 23 except that the drying rate was 20 [mg/cm²·min].

### (Example 25)

A fuel cell was prepared in the same manner as in Example 1 except that the catalyst-supporting carbon powder was a catalyst-supporting carbon powder comprising Vulcan XC-72 having 20% by weight of platinum catalyst supported thereon.

### (Example 26)

A fuel cell was prepared in the same manner as in Example 25 except that the drying rate was 10 [mg/cm²·min].

### (Example 27)

A fuel cell was prepared in the same manner as in Example 26 except that the drying rate was 20 [mg/cm²·min].

### (Example 28)

A fuel cell was prepared in the same manner as in Example 25 except that the thickness of the catalyst layer was 15 µm.

### (Example 29)

A fuel cell was prepared in the same manner as in Example 28 except that the drying rate was 10 [mg/cm²·min].

### (Example 30)

A fuel cell was prepared in the same manner as in Example 29 except that the drying rate was 20 [mg/cm²·min].

### (Example 31)

A fuel cell was prepared in the same manner as in Example 25 except that the thickness of the catalyst layer was 20 µm.

### (Example 32)

A fuel cell was prepared in the same manner as in Example 31 except that the drying rate was 10 [mg/cm²·min].

### (Example 33)

A fuel cell was prepared in the same manner as in Example 32 except that the drying rate was 20 [mg/cm²·min].

### (Example 34)

A fuel cell was prepared in the same manner as in Example 25 except that the thickness of the catalyst layer was 25 µm.

### (Example 35)

A fuel cell was prepared in the same manner as in Example 34 except that the drying rate was 10 [mg/cm²·min].

### (Example 36)

A fuel cell was prepared in the same manner as in Example 35 except that the drying rate was 20 [mg/cm²·min].

Next, various comparative examples will be described.

### (Comparative Example 1)

A fuel cell was prepared in the same manner as in Example 1 except that the thickness of the catalyst layer was 5 µm.

### (Comparative Example 2)

A fuel cell was prepared in the same manner as in Comparative Example 1 except that the drying rate was 20 [mg/cm²·min].

### (Comparative Example 3)

A fuel cell was prepared in the same manner as in Example 1 except that the thickness of the catalyst layer was 30 µm.

### (Comparative Example 4)

A fuel cell was prepared in the same manner as in Comparative Example 3 except that the drying rate was 20 [mg/cm²·min].

### (Comparative Example 5)

A fuel cell was prepared in the same manner as in Example 1 except that the thickness of the catalyst layer was 10 µm and the drying rate was 1 [mg/cm²·min].

### (Comparative Example 6)

A fuel cell was prepared in the same manner as in Comparative Example 5 except that the drying rate was 50 [mg/cm²·min].

### (Comparative Example 7)

A fuel cell was prepared in the same manner as in Example 1 except that the thickness of the catalyst layer was 20 µm and the drying rate was 1 [mg/cm²·min].

### (Comparative Example 8)

A fuel cell was prepared in the same manner as in Comparative Example 7 except that the drying rate was 50 [mg/cm²·min].

### (Comparative Example 9)

A fuel cell was prepared in the same manner as in Example 13 except that the thickness of the catalyst layer was 5 µm.

### (Comparative Example 10)

A fuel cell was prepared in the same manner as in Comparative Example 9 except that the drying rate was 20 [mg/cm²·min].

### (Comparative Example 11)

A fuel cell was prepared in the same manner as in Example 13 except that the thickness of the catalyst layer was 30 µm.

### (Comparative Example 12)

A fuel cell was prepared in the same manner as in Comparative Example 11 except that the drying rate was 20 [mg/cm²·min].

### (Comparative Example 13)

A fuel cell was prepared in the same manner as in Example 13 except that the thickness of the catalyst layer was 10 µm and the drying rate was 1 [mg/cm²·min].

### (Comparative Example 14)

A fuel cell was prepared in the same manner as in Comparative Example 13 except that the drying rate was 50 [mg/cm²·min].

### (Comparative Example 15)

A fuel cell was prepared in the same manner as in Example 13 except that the thickness of the catalyst layer was 20 µm and the drying rate was 1 [mg/cm²·min].

### (Comparative Example 16)

A fuel cell was prepared in the same manner as in Comparative Example 15 except that the drying rate was 50 [mg/cm²·min].

### (Comparative Example 17)

A fuel cell was prepared in the same manner as in Comparative Example 25 except that the thickness of the catalyst layer was 5 µm.

### (Comparative Example 18)

A fuel cell was prepared in the same manner as in Comparative Example 17 except that the drying rate was 20 [mg/cm²·min].

### (Comparative Example 19)

A fuel cell was prepared in the same manner as in Example 25 except that the thickness of the catalyst layer was 30 µm.

### (Comparative Example 20)

A fuel cell was prepared in the same manner as in Comparative Example 19 except that the drying rate was 20 [mg/cm²·min].

### (Comparative Example 21)

A fuel cell was prepared in the same manner as in Example 25 except that the thickness of the catalyst layer was 10 µm and the drying rate was 1 [mg/cm²·min].

### (Comparative Example 22)

A fuel cell was prepared in the same manner as in Comparative Example 21 except that the drying rate was 50 [mg/cm²·min].

### (Comparative Example 23)

A fuel cell was prepared in the same manner as in .Example 25 except that the thickness of the catalyst layer was 20 µm and the drying rate was 1 [mg/cm²·min].

### (Comparative Example 24)

A fuel cell was prepared in the same manner as in Comparative Example 23 except that the drying rate was 50 [mg/cm²·min].

### (Comparative Example 25)

A fuel cell was prepared in the same manner as in Example 1 except that the catalyst-supporting carbon powder was a catalyst-supporting carbon powder comprising ketjen black having 1% by weight of platinum catalyst supported thereon.

### (Comparative Example 26)

A fuel cell was prepared in the same manner as in Comparative Example 25 except that the drying rate was 20 [mg/cm²·min].

### (Comparative Example 27)

A fuel cell was prepared in the same manner as in Comparative Example 25 except that the thickness of the catalyst layer was 15 µm.

### (Comparative Example 28)

A fuel cell was prepared in the same manner as in Comparative Example 27 except that the drying rate was 20 [mg/cm²·min].

### (Comparative Example 29)

A fuel cell was prepared in the same manner as in Comparative Example 25 except that the thickness of the catalyst layer was 20 µm.

### (Comparative Example 30)

A fuel cell was prepared in the same manner as in Comparative Example 29 except that the drying rate was 20 [mg/cm²·min].

Conditions of production of catalyst electrode will be set forth in Table 1.

**(Table 1)**

| | | Catalyst carrier/amount of catalyst | Thickness [µm] | Drying rate [mg/cm²·min] |
|---|---|---|---|---|
| Example | 1 | Ketjen black/Pt5wt% | 10 | 2.5 |
| | 2 | ↑ | 10 | 10 |
| | 3 | ↑ | 10 | 20 |
| | 4 | ↑ | 15 | 2.5 |
| | 5 | ↑ | 15 | 10 |
| | 6 | ↑ | 15 | 20 |
| | 7 | ↑ | 20 | 2.5 |
| | 8 | ↑ | 20 | 10 |
| | 9 | ↑ | 20 | 20 |
| | 10 | ↑ | 25 | 2.5 |
| | 11 | ↑ | 25 | 10 |
| | 12 | ↑ | 25 | 20 |
| Example | 13 | Ketjen black/Pt20wt% | 10 | 2.5 |
| | 14 | T | 10 | 10 |
| | 15 | T | 10 | 20 |
| | 16 | T | 15 | 2.5 |
| | 17 | T | 15 | 10 |
| | 18 | T | 15 | 20 |
| | 19 | ↑ | 20 | 2.5 |
| | 20 | ↑ | 20 | 10 |
| | 21 | ↑ | 20 | 20 |
| | 22 | ↑ | 25 | 2.5 |
| | 23 | ↑ | 25 | 10 |
| | 24 | ↑ | 25 | 20 |
| Example | 25 | Vulcan XC-72/Pt20wt% | 10 | 2.5 |
| | 26 | T | 10 | 10 |
| | 27 | ↑ | 10 | 20 |
| | 28 | ↑ | 15 | 2.5 |
| | 29 | T | 15 | 10 |
| | 30 | ↑ | 15 | 20 |
| | 31 | ↑ | 20 | 2.5 |
| | 32 | ↑ | 20 | 10 |
| | 33 | ↑ | 20 | 20 |
| | 34 | ↑ | 25 | 2.5 |
| | 35 | ↑ | 25 | 10 |
| | 36 | ↑ | 25 | 20 |
| Comparative Example | 1 | Ketjen black/Pt5wt% | 5 | 2.5 |
| | 2 | ↑ | 5 | 20 |
| | 3 | ↑ | 30 | 2.5 |
| | 4 | ↑ | 30 | 20 |
| | 5 | ↑ | 10 | 1 |
| | 6 | ↑ | 10 | 50 |
| | 7 | ↑ | 20 | 1 |
| | 8 | ↑ | 20 | 50 |
| Comparative Example | 9 | Ketj en black/Pt20wt% | 5 | 2.5 |
| | 10 | T | 5 | 20 |
| | 11 | T | 30 | 2.5 |
| | 12 | ↑ | 30 | 20 |
| | 13 | ↑ | 10 | 1 |
| | 14 | ↑ | 10 | 50 |
| | 15 | ↑ | 20 | 1 |
| | 16 | T | 20 | 50 |
| Comparative Example | 17 | Vulcan XC-72/Pt20wt% | 5 | 2.5 |
| | 18 | ↑ | 5 | 20 |
| | 19 | ↑ | 30 | 2.5 |
| | 20 | ↑ | 30 | 20 |
| | 21 | ↑ | 10 | 1 |
| | 22 | ↑ | 10 | 50 |
| | 23 | ↑ | 20 | 1 |
| | 24 | ↑ | 20 | 50 |
| Comparative Example | 25 | Ketjen black/Pt1wt% | 10 | 2.5 |
| | 26 | ↑ | 10 | 20 |
| | 27 | ↑ | 15 | 2.5 |
| | 28 | ↑ | 15 | 20 |
| | 29 | ↑ | 20 | 2.5 |
| | 30 | ↑ | 20 | 20 |

The electrodes and single cells thus obtained were evaluated for the following properties.

### (1) Cracking on electrode

The electrode was subjected to segmentation to determine cracking occupation area [%].

### (2) Electrode volume resistivity

The electrode was measured by a resistivity meter to calculate volume resistivity [Ω·cm].

### (3) Discharge rate, life performance

The cell was subjected to discharge test at a cell temperature of 70°C, a fuel gas utilization rate (Uf) of 70% and an air utilization ratio (Uo) of 40% with a modified fake gas (carbon dioxide: 25%; carbon monoxide: 50 ppm; hydrogen gas: balance) and air supplied onto the fuel electrode and the air electrode, respectively, and the gas moistening being conducted by passing the modified fake gas and air through a bubbler at 70°C to adjust the dew point.

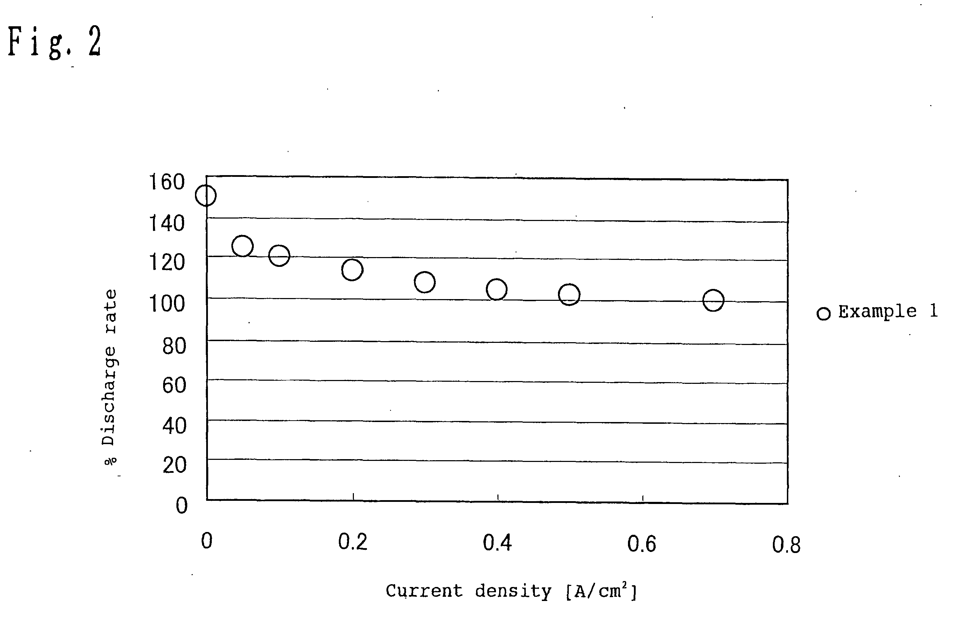

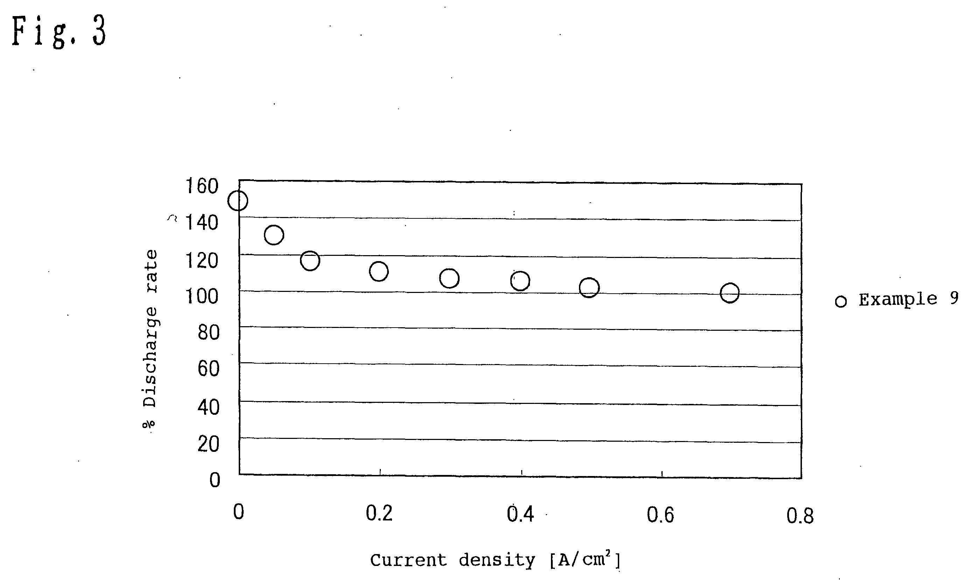

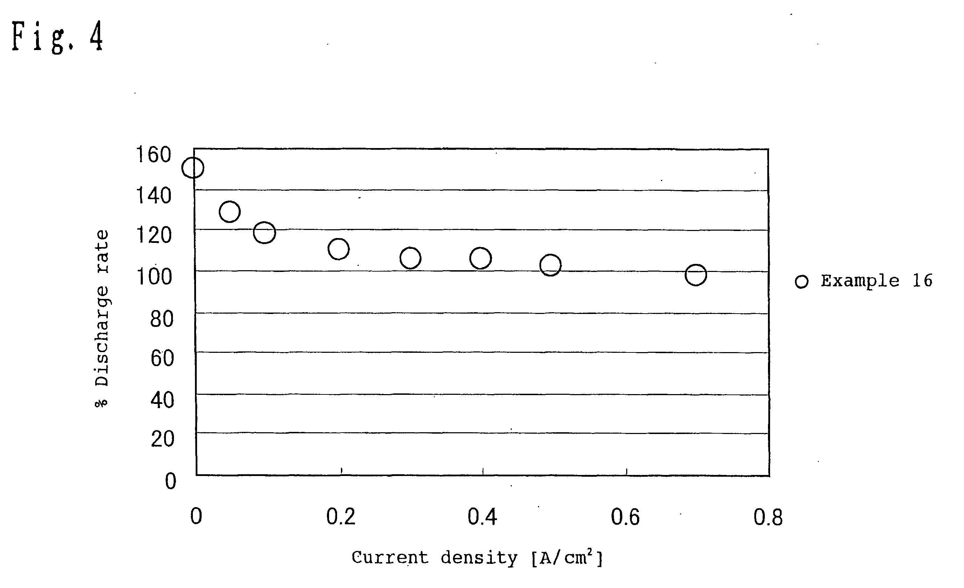

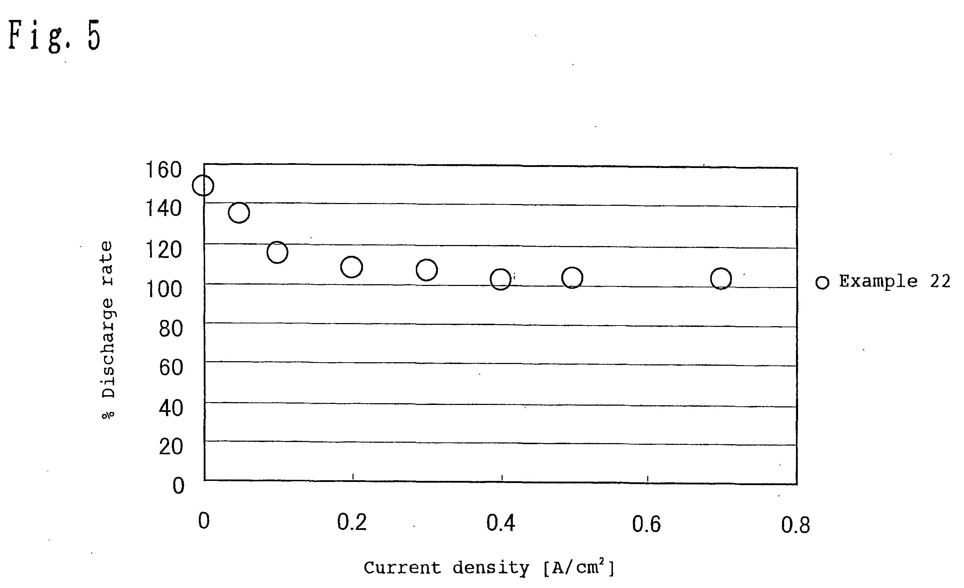

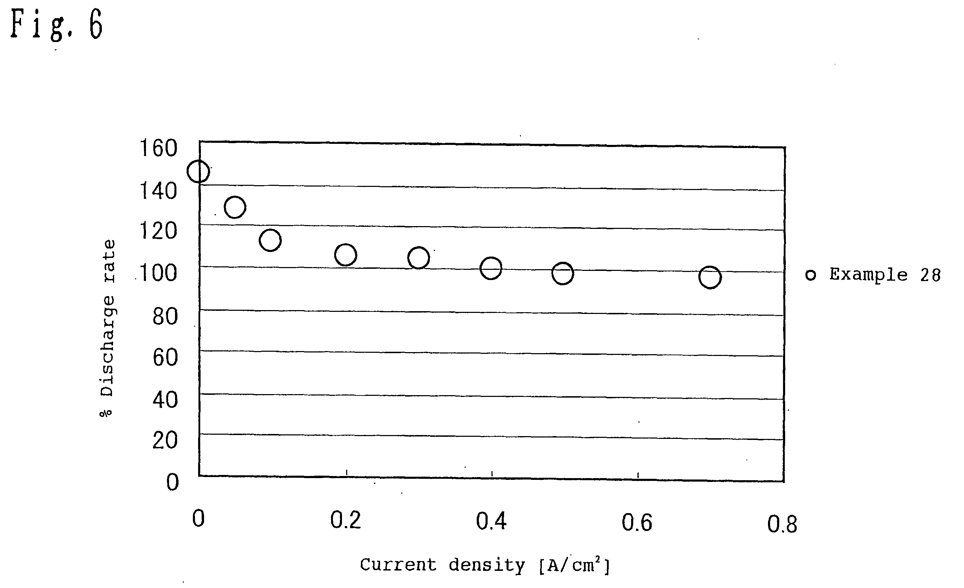

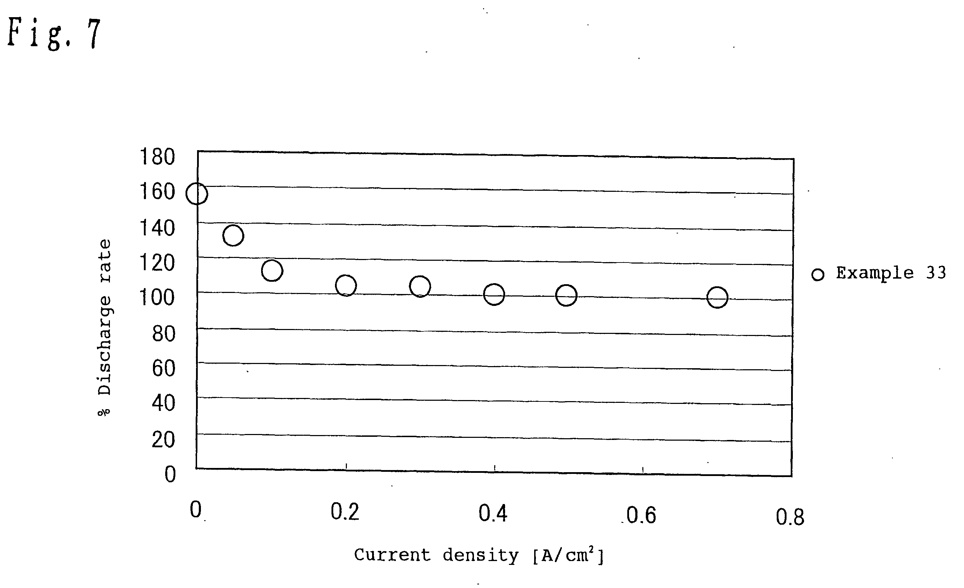

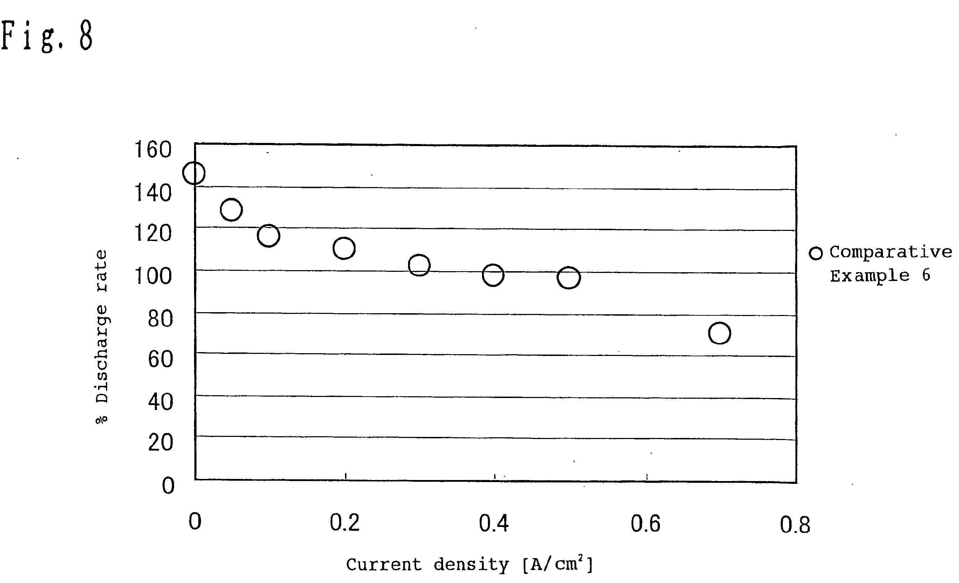

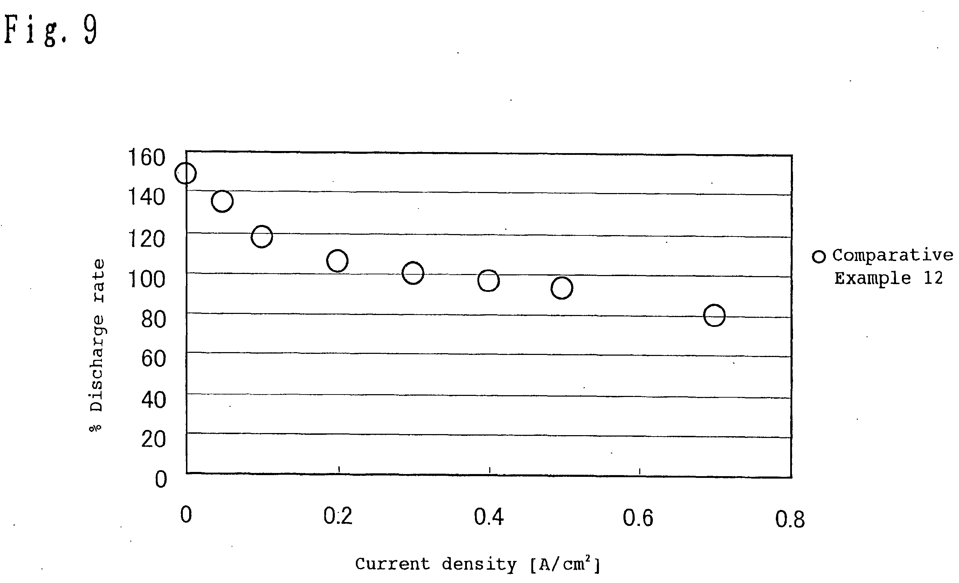

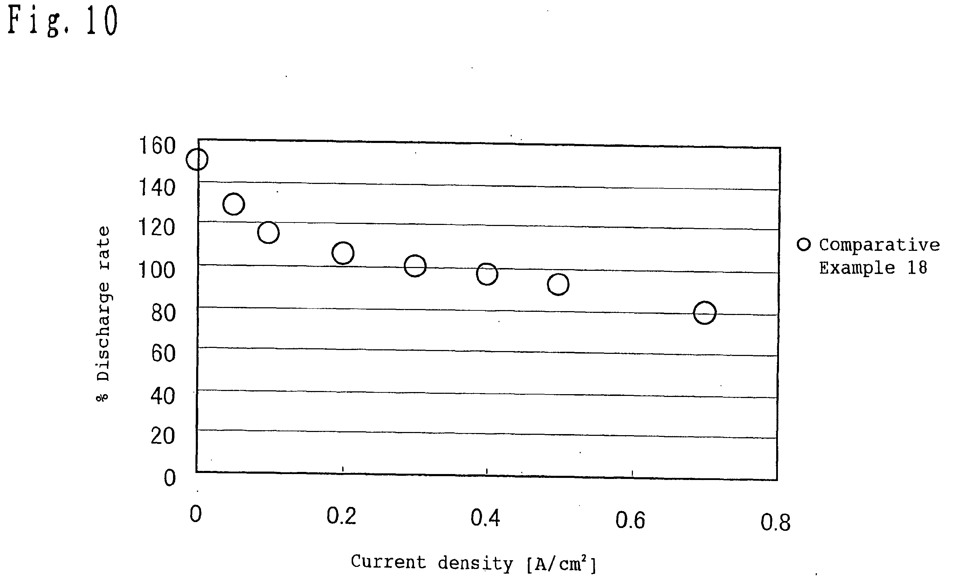

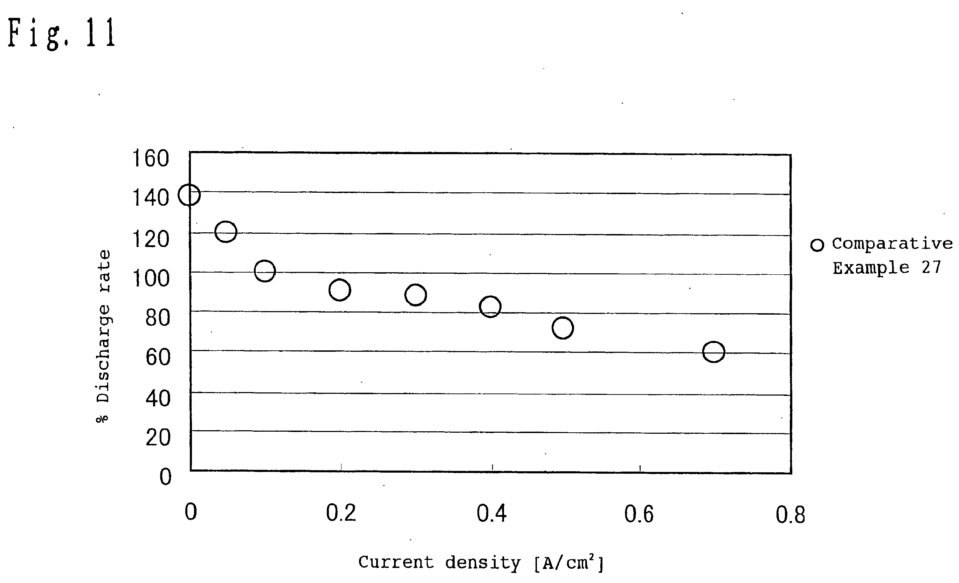

Figs. 2 to 11 illustrate examples of current-voltage characteristics of hydrogen-air type fuel cells of the examples of the present invention and the comparative examples. The data of discharge rate were evaluated relative to the voltage at 0.7 A/cm2 of Example 1 as 100%.

Fig. 12 illustrates examples of the life performance of these cells. The life performance is represented relative to the initial voltage of the respective cell as 100%. The time at which the cell voltage reaches 90% of the initial value was evaluated as durability time.

Table 2 shows the results of evaluation of the electrodes and cells.

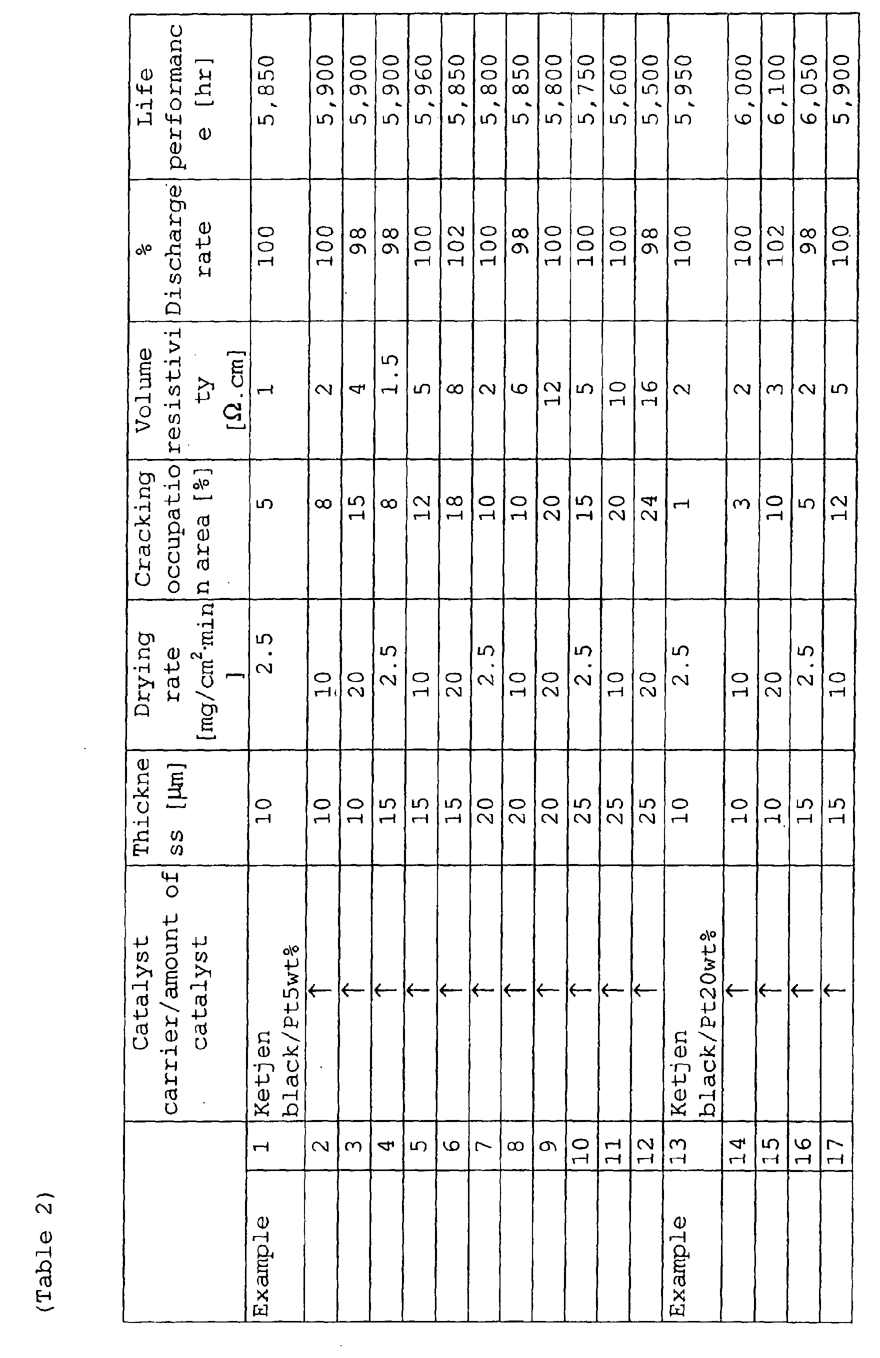

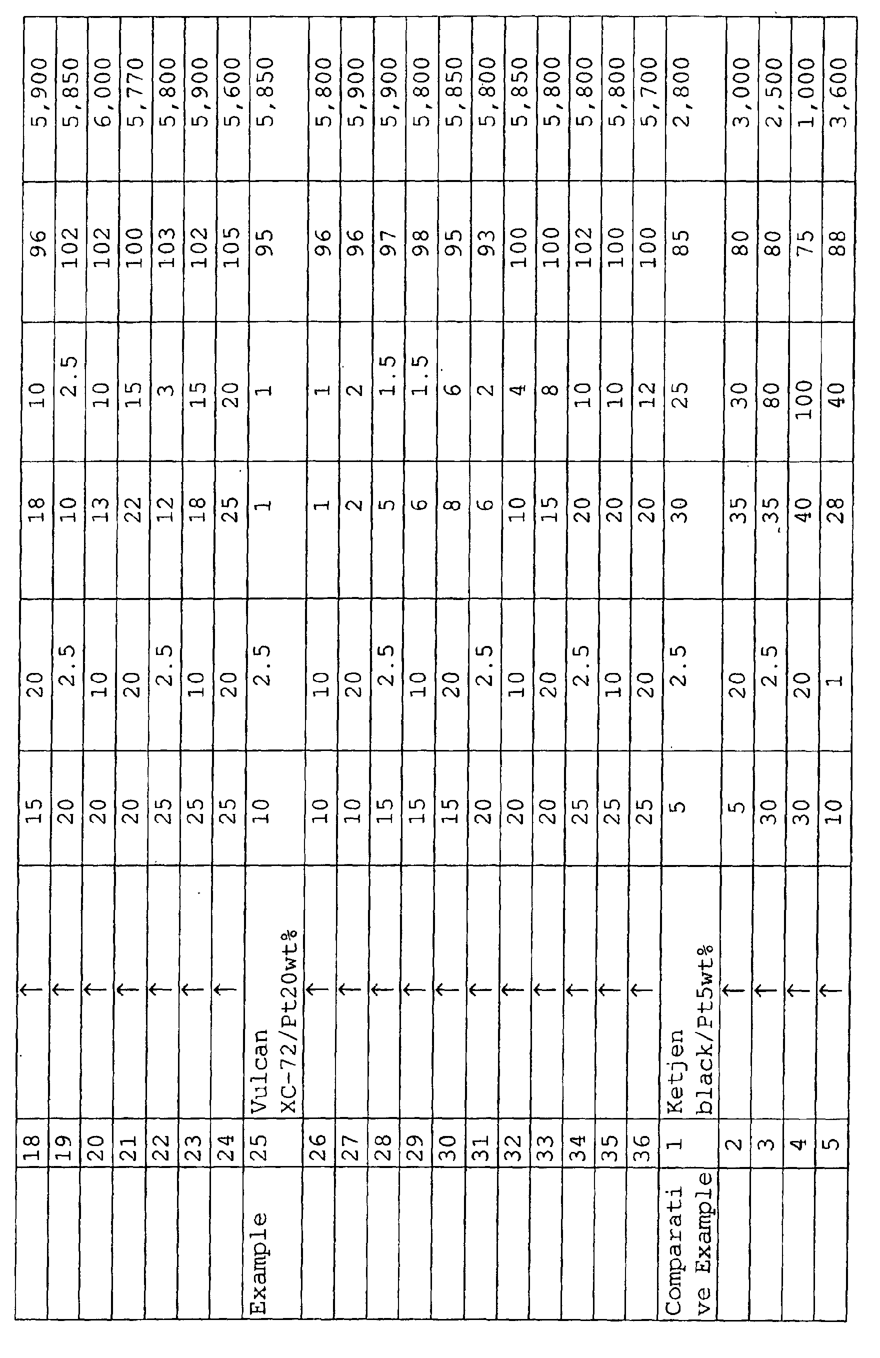

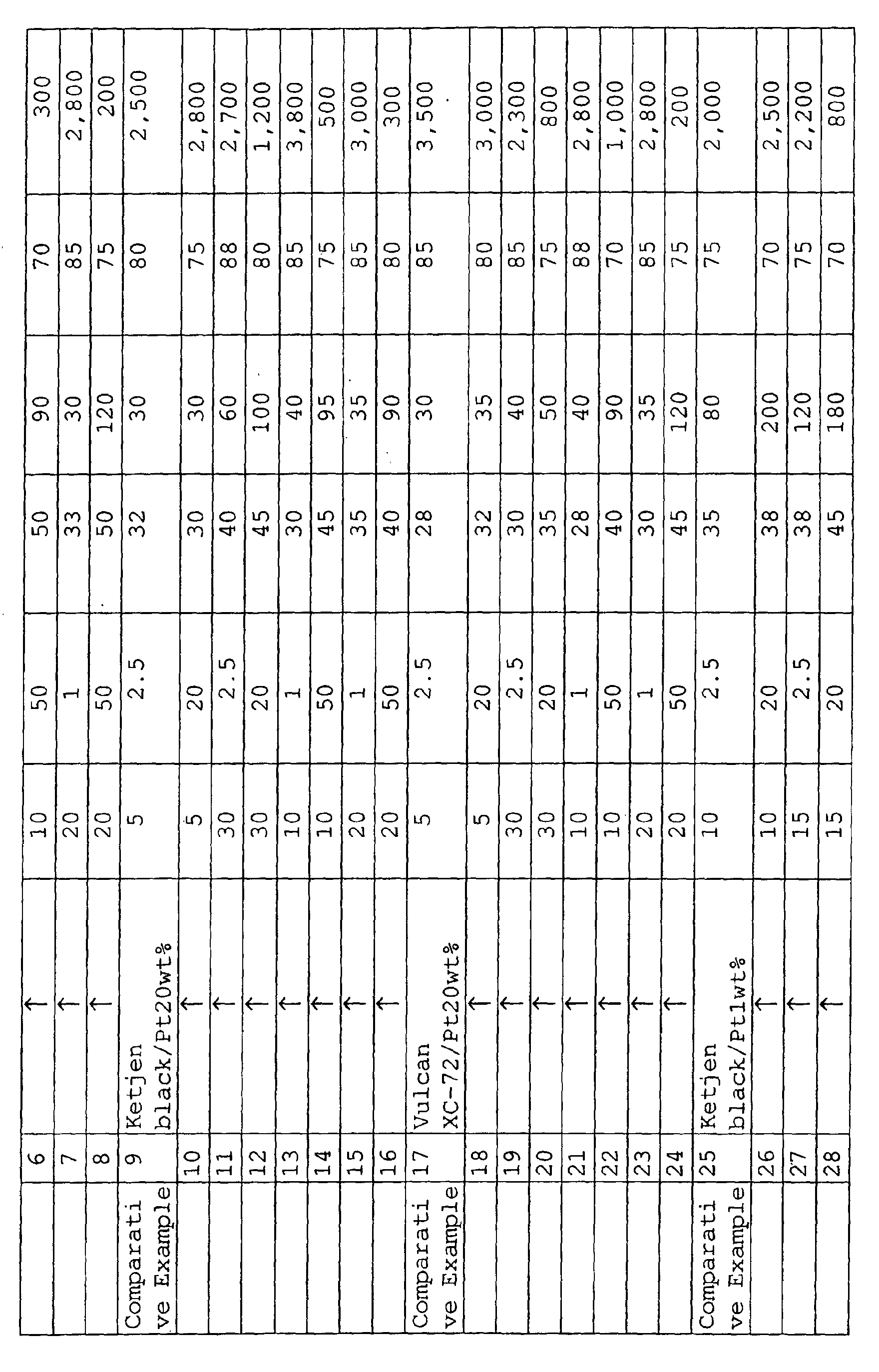

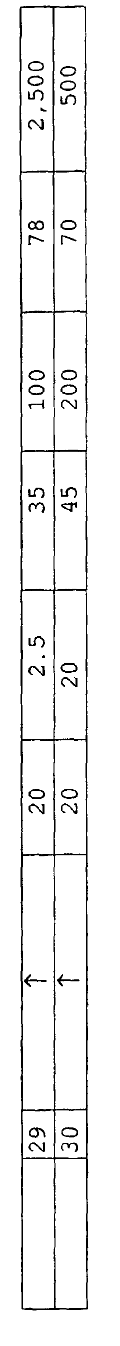

As can be seen in the results , the cracking occupation area is preferably not greater than 25%.

It is also made obvious that the volume resistivity is preferably not greater than 100 Ωcm.

In accordance with the aforementioned examples and comparative examples, it is made obvious that in a preferred embodiment of the polymer electrolyte membrane type fuel cell of the present invention or the method of producing same, the thickness is predetermined to be from 10 µm to 25 µm, the kind of carbon having a noble metal catalyst supported thereon is predetermined to be carbon having from 5 wt% to 20 wt% of platinum supported thereon and the drying rate of the solvent is predetermined to be from 2.5 mg/cm²·min to 20 mg/cm²·min.

Referring further to a particularly preferred range of numeral value, it is made obvious that the thickness is from 10 µm to 25 µm, as the carbon powder having a noble metal supported thereon there is used acetylene black having 5% by weight of platinum supported thereon, acetylene black having 20% by weight of platinum supported thereon or Vulcan XC-72 having 20% by weight of platinum supported thereon, as the solvent there is used a mixture of water, ethanol, isopropyl alcohol and ethylene glycol, and the drying rate is predetermined to be from 2.5 mg/cm²·min to 20 mg/cm²·min.

The fuel cell according to the present invention can be applied to fuel cell for business use, not to mention to household fuel cell.

The embodiments of implementation of the present invention have been described with reference to the method of producing an anode catalyst layer of fuel cell. However, similar results were obtained with cathode catalyst layer.

### Industrial Applicability

As can be seen in the description given above, the present invention can provide a method of producing a high quality polymer electrolyte type fuel cell which undergoes no leak and exhibits an improved life performance and such a polymer electrolyte type fuel cell.

## Claims

1. A method of producing a polymer electrolyte membrane type fuel cell comprising a polymer electrolyte membrane, electrodes each containing a gas diffusion layer and a catalyst layer provided in contact with the aforementioned polymer electrolyte membrane, disposed on the respective side of the aforementioned polymer electrolyte membrane and a separator provided in contact with the aforementioned gas diffusion layer, **characterized in that** during a step of spreading a paste containing at least a finely divided carbon powder having a noble metal catalyst supported thereon, over a predetermined support and drying the coated support to form the aforementioned catalyst layer, the cracking occupation area on the aforementioned electrodes is controlled to a predetermined tolerance focusing at least (1) thickness of the aforementioned catalyst layer, (2) kind of carbon having the aforementioned noble metal catalyst supported thereon and (3) drying rate of the solvent of the aforementioned paste.

2. The method of producing a polymer electrolyte membrane type fuel cell as described in Claim 1, wherein the tolerance of the aforementioned cracking occupation area is not greater than 25%.
